# EUROPÄISCHE PATENTSCHRIFT

(11) **EP 3 883 823 B1**
(45) Veröffentlichungstag und Bekanntmachung des Hinweises auf die Patenterteilung: **23.07.2025**
(21) Anmeldenummer: 19808776.9
(22) Anmeldetag: 21.11.2019
(51) Int. Cl.: B60R 21/232, B60R 21/2338

(54) **GASSACKMODUL FÜR EIN FAHRZEUGINSASSENRÜCKHALTESYSTEM**
AIRBAG MODULE FOR A VEHICLE OCCUPANT RESTRAINT SYSTEM
MODULE DE COUSSIN GONFLABLE POUR UN SYSTÈME DE RETENUE D'OCCUPANTS DE VÉHICULE

(30) Priorität: 23.11.2018 DE 102018129578
(43) Veröffentlichungstag der Anmeldung: 29.09.2021
(73) Patentinhaber: Dalphi Metal España, S.A., 36213 Vigo (ES)
(72) Erfinder: SÁNCHEZ RODRÍGUEZ, Estér, 36380 Gondomar (ES)
(74) Vertreter: ZF LIFETEC Intellectual Property
(86) Internationale Anmeldenummer: PCT/EP2019/082144
(87) Internationale Veröffentlichungsnummer: WO 2020/104618

(56) Entgegenhaltungen:
- EP-A1- 1 679 235
- DE-A1- 102014 016 124
- DE-A1- 102016 008 241
- DE-A1- 102016 120 987
- DE-B4- 112010 004 206
- DE-T2- 602004 004 576
- US-A1- 2006 061 074
- US-A1- 2016 221 527

## Beschreibung

Die vorliegende Erfindung betrifft ein Curtainairbagmodul für ein Fahrzeuginsassenrückhaltesystem eines Fahrzeuges gemäß Oberbegriff des Patentanspruches 1. Daneben betrifft die Erfindung ein Fahrzeuginsassenrückhaltesystem. Beispielhaft zeigen die Dokumente DE10 2014 016124 A1 oder DE 10 2016 008241 A1 jeweils ein Curtainairbagmodul nach dem Oberbegriff des Anspruchs 1.

Gassackmodule, insbesondere Seitenkopfgassackmodule, auch als Curtainairbagmodule bezeichnet sind aus dem Stand der Technik hinreichend bekannt. Sie dienen der Reduzierung der auf einen Fahrzeuginsassen bei einem Seitenaufprall einwirkenden Kräfte. Derartige Gassackmodule werden beispielsweise über Befestigungsabschnitte 7' an ihrem oberen Randbereich 3o' an der Fahrzeugkarosserie hinter einer Fahrzeuginnenraumverkleidung im Fahrzeuginnenraum befestigt sodass sich der gefaltete Gassack im Aktivierungsfall durch die aufklappende Fahrzeuginnenraumverkleidung entfalten kann.

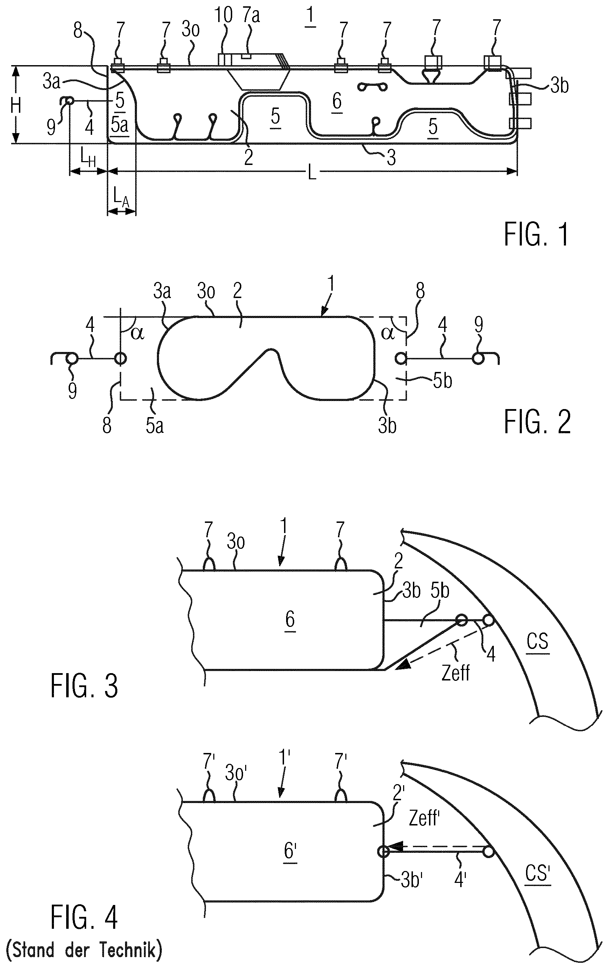

Um das Entfaltungsverhalten bei dem bekannten, in Fig. 4 gezeigten, Gassackmodul 1' beeinflussen zu können, ist es bekannt, dass der Gassack 2' mit einem oder mehreren Haltebändern 4' versehen ist, die einerseits karosserieseitig an der A- bzw. C-Säule CS' und andererseits gassackseitig an einem vorderen bzw. hinteren Randbereich 3b' des aufgeblasenen Gassackbereiches 6' befestigt sind. Es hat sich gezeigt, dass der Gassack 2' in bestimmten Situationen nur langsam aus seiner Ruhestellung hervortritt, da sich der Gassack 2' beispielsweise aufgrund einer starren Befestigung der Fahrzeuginnenraumverkleidung in seinen Randbereichen nur nach und nach aufblasen lässt.

Der vorliegenden Erfindung liegt die Aufgabe zugrunde, ein Curtainairbagmodul sowie ein Fahrzeuginsassenrückhaltesystem der eingangs beschriebenen Gattungen vorzuschlagen, bei denen das Entfaltungsverhalten des Gassackes weiter verbessert wird.

Diese Aufgabe wird erfindungsgemäß im Hinblick auf ein Curtainairbagmodul durch die Merkmale des Patentanspruchs 1 und im Hinblick auf ein Fahrzeuginsassenrückhaltesystem durch die Merkmale des Patentanspruchs 5 gelöst.

Vorteilhafte und beanspruchte Weiterbildungen ergeben sich aus den Unteransprüchen und der Beschreibung sowie den Zeichnungen.

Demzufolge wird ein Curtainairbagmodul nach Anspruch 1 für ein Fahrzeuginsassenrückhaltesystem vorgeschlagen, mit zumindest einem Gassack zur Montage an einem Fahrzeugkörper, wobei zumindest ein einerseits fahrzeugseitig befestigbares und andererseits gassackseitig befestigtes Halteelement zum Positionieren des Gassackes im aktivierten Zustand vorgesehen ist, wobei das Halteelement an einem zusätzlichen, nicht-aufblasbaren Flächenabschnitt befestigt ist, der mit einem aufblasbaren Abschnitt des Gassackes verbunden ist.

Durch die Verlegung der gassackseitigen Befestigungsposition des Halteelements an einen zusätzlichen, nicht aufblasbaren Bereich wird in vorteilhafter Weise der bei der Entfaltung wirkende Zugwinkel bei der angreifenden Zugkraft auf den Gassack derart verändert, dass sich auch die Randbereiche des sich entfaltenden Gassackes schneller aus ihrer Ruhestellung zwischen der Fahrzeuginnenraumverkleidung und/oder anderen Bauteilen der Karosserie herauslösen. Dies wird insbesondere dadurch erreicht, dass zusätzliche in Entfaltungsrichtung auf den Gassack aufgrund der veränderten Befestigungsposition wirkende Zugkräfte quasi ein Herausziehen des Gassackes aus der Fahrzeuginnenraumverkleidung und ein anschließendes Straffen und Verspannen bewirken.

Die erfindungsgemäß vorgeschlagene Verbesserung des Entfaltungsverhaltens bei dem Gassackmodul zeigt sich besonders bei extremen Umgebungsbedingungen bezüglich Temperatur und weiterer Aufblasbedingungen. Demzufolge wird bei dem vorgeschlagenen Gassackmodul nicht nur das Entfaltungsverhalten deutlich verbessert, sondern auch insgesamt die Funktionsweise des Gassackmodules insbesondere bei extremen Umgebungsbedingungen verbessert.

Dadurch, dass bei dem vorgeschlagenen Gassackmodul der Flächenabschnitt einerseits mit dem Randbereich des Gassackes und andererseits an dem flächenabschnittseitigen bzw. gassackseitigen Ende des Halteelements befestigt ist, dient der Flächenabschnitt aufgrund der vom äußeren Randbereich des Gassackes wegverlagerten Befestigungsposition als besonders effektives Zugkraftübertragungsmittel und kann dementsprechend je nach Form und Ausgestaltung vorbestimmte Zugwinkel realisieren.

Der Flächenabschnitt kann aus Kostengründen vorzugsweise aus einem Stoff- bzw.

Gewebematerial hergestellt sein, welches dem Material des Gassackes entspricht oder dem ähnlich ist. Es ist je nach Verwendungsart möglich, auch andere Materialien zu verwenden. Vorzugsweise sind der zusätzliche, nicht aufblasbare Flächenabschnitt und der aufblasbare Flächenabschnitt gemeinsam gewebt bzw. zusammenhängend aus einer Gewebebahn ausgeschnitten.

Die vorbeschriebene Wirkung wird insbesondere dadurch verstärkt, dass das Halteelement quasi punktförmig an dem Flächenabschnitt befestigt ist, sodass ausgehend von der punktförmigen Befestigungsposition je nach Flächenform entsprechende Zugkraftkomponenten jeweils in einem vorbestimmten Zugwinkel auf den Gassack übertragen werden.

Eine besonders bevorzugte Ausführungsvariante der vorliegenden Erfindung sieht vor, dass das Gassackmodul hinter einer Fahrzeuginnenraumverkleidung einer A-Säule an der Karosserie montiert ist, wobei der Flächenabschnitt bzw. das Flächenelement mit dem zumindest einen befestigten Halteelement dem in Fahrtrichtung vorderen Abschnitt des Gassackes zugeordnet ist. Der Einsatz des erfindungsgemäßen Gassackmodules im Bereich der A-Säule ist besonders vorteilhaft, da die Fahrzeuginnenraumverkleidung der A-Säule in veränderter an jeweils vorliegenden Umgebungsbedingungen angepasster Form und auch wesentlich steifer ausgeführt werden kann, ohne dass das Entfaltungsverhalten nachteilig beeinflusst wird.

Die Erfindung betrifft ein Curtainairbagmodul, das als Seitenkopfgassack ausgebildet ist, wobei es an seinem, in Einbauzustand oberen Randbereich eine Mehrzahl von Befestigungsstellen zur Montage an einem Dachinnenbereich des Fahrzeugkörpers aufweist. Zumindest ein zusätzlicher, nicht aufblasbarer Flächenabschnitt ist an einem im Einbauzustand vorderen Randbereich und/ oder an einem im Einbauzustand hinteren Randbereich des aufblasbaren Abschnittes des Gassackes angeordnet.

Hierdurch wird eine gewünschte Verspannung des Gassackes im aufgeblasenen Zustand ermöglicht, die die Schutzwirkung fördert.

Es wird weiterhin vorgeschlagen, dass das Halteelement an einem freien Randbereich des zusätzlichen, nicht aufblasbaren Flächenabschnittes befestigt ist, wobei die die Befestigung im mittleren Drittel einer Höhe des Gassackes vorgesehen ist. Auch hierdurch wird eine gewünschte Verspannung des Gassackes im aufgeblasenen Zustand ermöglicht, die die Schutzwirkung fördert.

In einer bevorzugten Ausführung ist das Halteelement ein Zugband**,** das vorzugsweise im Bereich seines gassackseitigen Endes mit dem Gassack vernäht ist, und bei dem, weiter vorzugsweise, an dessen anderem Ende ein Verbindungselement, insbesondere ein Hakenelement, zur Verbindung des Halteelementes mit der dem Fahrzeugkörper, insbesondere einer A- oder C-Säule, befestigt ist. Hierdurch ist eine effektivere Fertigung des Gassackmoduls möglich.

Eine Länge L_{A} des zusätzlichen, nicht aufblasbaren Flächenabschnittes auf Höhe des Halteelementes beträgt mehr als ein Drittel, der freien Länge L_{H} des Halteelementes.

Hierdurch wird der Kraftansatzpunkt des Zugbandes am Gassack weiter von dem aufblasbaren Bereich des Gassackes beabstandet. Da der zusätzliche nicht-aufblasbare Flächenabschnitt die von dem sich im Wesentlichen senkrecht (nach unten) entfaltenden aufblasbaren Bereich des Gassackes resultierenden Zugkräfte auch schräg übertragen kann, ändert sich der effektive Zugwinkel Z_{eff} aus einer im Wesentlichen horizontalen Zugrichtung in eine schräg nach unten gerichtete Zugrichtung. Somit wird der Gassack nicht nur in Horizontalrichtung aus seiner Ruheposition hinter der Fahrzeugverkleidung herausgezogen, sondern zusätzlich in der schräg nach unten gerichteten Richtung. Auch dadurch wird eine schnellere Entfaltung ermöglicht.

Auch ist bevorzugt, dass ein freier Randbereich des zusätzlichen, nicht aufblasbaren Flächenabschnittes und ein oberer Randbereich des Gassackes einen Winkel α zwischen 70° und 130°, vorzugsweise zwischen 80° und 110° einschließen.

Indem der freie seitliche Randbereich in diesem Winkelbereich (optimal 90°) zum oberen Randbereich des Gassackes ausgebildet ist, ist es möglich den effektive Zugwinkel Z_{eff} vom Ansatzpunkt des Halteelementes (4) auf die vordere bzw. hintere, untere Ecke des aufblasbaren Flächenabschnittes des Gassackes zu richten. Auch dadurch wird eine schnellere Entfaltung ermöglicht.

Weiter ist bevorzugt, dass das Gassackmodul hinter einer Fahrzeuginnenraumverkleidung montierbar ist, und sich im aufgeblasenen Zustand von einer A-Säule bis zu einer C-Säule oder D-Säule erstreckt.

Gemäß einer weiter bevorzugten Ausführungsform wird vorgeschlagen, dass das Gassackes einen Gasgenerator zum Bereitstellen von Aufblasgas für den Gassack und eine Mehrzahl von Befestigungseinrichtungen aufweist, die vorzugsweise an einem oberen Randbereich des Gassackes angebracht sind.

Ein weiterer nebengeordneter Aspekt der vorliegenden Erfindung beruht darauf, ein Fahrzeuginsassenrückhaltesystem mit dem erfindungsgemäßen Gassackmodul sowie mit zumindest einer Sensoreinheit zum Erfassen von Umständen, die einen Aktivierungsfall des Gasgenerators auslösen, und mit einer Recheneinheit zum Definieren des Aktivierungsfalles auf Basis der von der Sensoreinheit erfassten Umstände bereitzustellen. Bei dem vorgeschlagenen Fahrzeuginsassenrückhaltesystem ergeben sich die bereits beschriebenen und weiteren Vorteile.

Nachfolgend wird die vorliegende Erfindung anhand der Zeichnungen weiter erläutert. Es zeigen:
- Figur 1: eine Ansicht einer möglichen Ausführungsvariante eines nicht erfindungsgemäßen Gassackmodules mit einem zusätzlichen Flächenabschnitt an einem aufgeblasenen Gassack als Fenster- bzw. Vorhangairbag;
- Figur 2: eine schematisch vereinfachte Ansicht der Ausführungsvariante des nicht erfindungsgemäßen Gassackmodules;
- Figur 3: eine schematische Ansicht einer Ausführungsvariante des erfindungsgemäßen Gassackmodules in ihrer Einbausituation, anhand der die Wirkung der Erfindung verdeutlicht wird; und
- Figur 4: eine schematische Ansicht eines herkömmlichen Gassackmodules in seiner Einbausituation.

Unabhängig von den jeweils in den Figuren 1 bis 3 dargestellten Ausführungsvarianten eines Gassackmodules 1 ist vorgesehen, dass das Gassackmodul 1, welches als Fahrzeuginsassenrückhaltesystem dient, einen gefalteten und/ oder gerollten Gassack 2 mit zumindest einer aufblasbaren Kammer als aufblasbaren Innenraum umfasst, wobei das Gassackmodul als Teil eines Gassackmoduls hinter einer Fahrzeuginnenraumverkleidung beispielsweise einer Deckenverkleidung, einer A-, C-, und/ oder D- Säule karosserieseitig montiert ist. Im Aktivierungsfall wird die Fahrzeuginnenraumverkleidung abgehoben und der Gassack kann sich in den Innenraum des Fahrzeuges entfalten. Um das Aufblas- bzw. das Entfaltungsverhalten des Gassackes 2 beeinflussen zu können, sind ein oder mehrere einerseits karosserieseitig befestigte und andererseits gassackseitig befestigte Halteelemente 4 oder dergleichen vorgesehen.

Um beispielsweise ein schnelleres Entfalten der vorderen bzw. hinteren Randbereiche 3a, 3b des aufblasbaren Volumens 6 des Gassackes 2 zu ermöglichen, ist erfindungsgemäß vorgesehen, dass das Halteband bzw. Halteelement 4 gassackseitig an einem zusätzlichen, nicht aufblasbaren vorderen bzw. hinteren Flächenabschnitt 5a, 5b befestigt ist, der mit dem aufblasbaren Flächenabschnitt 6 des Gassackes 2 verbunden bzw. einstückig ausgebildet ist. Demzufolge wird die gassackseitige Befestigungsposition des Halteelements 4 derart von dem Gassack 2 wegverlegt, dass ein schnelleres herausziehen aus der Ruheposition ermöglicht wird, ohne dass das erforderliche Straffen und lokales Verspannen des Gassackes 2 in seiner aufgeblasenen Stellung aufgegeben wird.

Bei sämtlichen Ausführungsvarianten ist vorgesehen, dass der zusätzliche, nicht aufblasbare Flächenabschnitt 5a, 5b einerseits mit einem äußeren Randbereich 3a, 3b aufblasbaren Flächenabschnittes 6 des Gassackes 2 und andererseits mit einem gassackseitigen bzw. flächenabschnittseitigen Ende des Halteelements 4 verbunden ist. Das dem Flächenabschnitt 5a, 5b abgewandte Ende des Haltelementes 4 ist, vorzugsweise mit einem Hakenelement 9, an einer Karosseriewand, insbesondere an der A- bzw. C- oder D- Säule, befestigt, je nachdem, ob es sich um ein vorderes oder ein hinteres Halteelement 4 handelt.

In Figur 1 ist beispielhaft das nicht zur Erfindung gehörende Gassackmodul 1 als Fenster- bzw. Vorhangairbag dargestellt, wobei der Gassack 2 im entfalteten, aber nicht-aufgeblasenen Zustand gezeigt ist. Bei dieser Ausführung ist der vordere, zusätzliche, nicht aufblasbare Flächenabschnitt 5a derart geformt, dass dieser gassackseitig eine an den Verlauf des äußeren Randbereiches 3 des aufblasbaren Flächenabschnitt 6 des Gassackes 2 angepasste Randform aufweist. Ferner ist das dem Gassack 2 zugewandte Ende des Halteelements 4 quasi punktförmig mit einem freien (seitlichen bzw. vorderen) Randbereich (8) Flächenabschnitt 5 zum Erzeugen eines verbesserten Zugkraftangriffes befestigt. Das vorgeschlagene Gassackmodul 1 ist hinter der Fahrzeuginnenraumverkleidung einer nicht weiter dargestellten A-Säule karosserieseitig montierbar, wobei der Flächenabschnitt 5 mit dem Befestigungsband bzw. Halteband 4 dem in Fahrtrichtung vorderen Abschnitt des Gassackes 2 zugeordnet ist.

Eine Länge L_{A} des zusätzlichen, nicht aufblasbaren Flächenabschnittes 5a auf (vertikaler) Höhe des Halteelementes 4 beträgt bei der dargestellten Ausführungsform ungefähr ein Drittel der freien Länge L_{H} des Halteelementes 4. Durch die Aufteilung der verfügbaren Länge zwischen karosserieseitigen Ende des Haltebandes 4 und dem gedachten Ansatzpunkt des Haltebandes 4 in seiner gedachten Verlängerung an dem aufblasbaren Flächenabschnitt 6 auf Halteband 4 und nicht-aufblasbaren Flächenabschnitt 5a, wird der tatsächliche Kraftübertragungspunkt Gassack/ Halteband weiter (nach vorne) zur Fahrzeugkarosserie hin verlagert.

Der freie seitliche (in Fig. 1 vordere) Randbereich 8 des zusätzlichen, nicht aufblasbaren vorderen Flächenabschnittes 5a und ein oberer Randbereich 3a des Gassackes 2 schließen einen Winkel (α) von ca. 90° ein, wie in Figur 2 skizziert.

Die in Figur 1 dargestellte Ausführung ist nochmals vereinfacht anhand einer schematischen Ansicht in Figur 2 dargestellt. Der gestrichelte Verlauf umgrenzt die zusätzlich vorgesehenen, nicht aufblasbaren Flächenabschnitte bzw. Stoffabschnitte 5a, 5b, die gassackseitig an den Verlauf der vorderen und hinteren, seitlichen, äußeren Randbereiche 3a, 3b des Gassackes 2 angepasst sind. Das flächenabschnittseitige Ende des Halteelements 4 ist etwa mittig bezüglich der seitlichen Höhe H des Gassackes 2 an der von diesem abgewandten Seite des Flächenabschnittes 5a, 5b im Wesentlichen punktförmig befestigt, insbesondere vernäht.

Figur 3 zeigt eine alternative bzw. schematische Ausführung eines erfindungsgemä-βen Gassackmoduls 1. Bei dieser Ausführung ist der Flächenabschnitt 5b dreieckförmig ausgeführt und mit einer Seite über eine vorbestimmte Länge mit dem hinteren Randbereich 3b des aufblasbaren Flächenabschnittes 6 des Gassackes 2 befestigt. Natürliche ist eine entsprechende Ausführung am vorderen Ende des Gassackes alternativ oder zusätzlich ebenfalls möglich. An der dem Gassack 2 abgewandten Spitze des dreieckförmigen Flächenabschnitts 5b ist das Halteelement 4 befestigt. Über die Schenkel des dreieckförmigen Flächenabschnittes 5b wird eine Zugkrafteinleitung in vorbestimmten Zugwinkeln auf den Gassack 2 zum schnelleren Entfalten, sowie zum Straffen und Verspannen des aufgeblasenen Gassackes 2 bewirkt.

Im Vergleich dieser schematisch dargestellten Ausführungsform mit dem in Figur 4 skizzierten herkömmlichen Beispiel eines Gassackmoduls, wird die erfindungsgemäß vorteilhafte effektive Kraft- bzw. Zugrichtung Z_{eff} beim Entfalten des relevanten hinteren bzw. vorderen Randbereiches des Gassackes aus seine Ruheposition hinter der Fahrzeuginnenraumabdeckung der C- bzw. A- Säule CS deutlich.

### Bezugszeichen

- 1: Gassackmodul
- 2: Gassack
- 3: äußerer Randbereich des Gassackes
- 3o: oberer Randbereich des Gassackes
- 3a: vorderer Randbereich des Gassackes
- 3b: hinterer Randbereich des Gassackes
- 4: Halteelement bzw. Halteband
- 5: nicht-aufblasbarer Flächenabschnitt
- 5a, 5b: zusätzlicher, nicht-aufblasbarer Flächenabschnitt
- 6: aufblasbarer Flächenabschnitt
- 7, 7a: obere Befestigungsstellen
- 8: freier Randbereich des nicht-aufblasbaren Flächenabschnittes
- 9: Hakenelement
- 10: Gasgenerator
- CS: C-Säule
- H: Höhe des Gassackzuschnittes im nicht-aufgeblasenen Zustand
- L: Länge des Gassackzuschnittes im nicht-aufgeblasenen Zustand
- L_{A}: Länge des zusätzlichen, nicht-aufblasbaren Flächenabschnittes
- L_{H}: freie Länge des Halteelementes
- α: Winkel zwischen dem freien (vorderen bzw. hinteren) Randbereich (8) des zusätzlichen, nicht aufblasbaren Flächenabschnittes (5 a) und dem oberen Randbereich (3a) des Gassackes (2)
- Z_{eff}: effektive Zugrichtung

## Patentansprüche

1. Curtainairbagmodul für ein Fahrzeuginsassenrückhaltesystem mit zumindest einem Gassack (2) zur Montage an einem Fahrzeugkörper, wobei der Gassack (2) als Seitenkopfgassack ausgebildet ist, und an seinem, in Einbauzustand oberen Randbereich (3o) eine Mehrzahl von Befestigungsstellen (7) zur Montage an einem Dachinnenbereich des Fahrzeugkörpers aufweist, wobei zumindest ein einerseits fahrzeugseitig befestigbares und andererseits gassackseitig befestigtes Halteelement (4) zum Positionieren des Gassackes (2) im aktivierten Zustand vorgesehen ist, wobei das Halteelement (4) an einem zusätzlichen, nicht-aufblasbaren Flächenabschnitt (5a, 5b) befestigt ist, der mit einem aufblasbaren Abschnitt (6) des Gassackes (2) verbunden ist, wobei der zumindest eine zusätzliche, nicht aufblasbare Flächenabschnitt (5a, 5b ) an einem im Einbauzustand vorderen Randbereich (3a) und/ oder an einem im Einbauzustand hinteren Randbereich (3b) des aufblasbaren Abschnittes (6) des Gassackes (2) angeordnet ist, und wobei das Halteelement (4) an einem freien Randbereich (8) des zusätzlichen, nicht aufblasbaren Flächenabschnittes (5a, 5b) befestigt ist, **dadurch gekennzeichnet, dass** der Flächenabschnitt (5a, 5b) dreieckförmig ausgeführt und mit einer Seite über eine vorbestimmte Länge mit dem vorderen und/oder hinteren Randbereich (3a, 3b) des aufblasbaren Flächenabschnittes (6) des Gassackes (2) befestigt ist und das Halteelement (4) an der dem Gassack (2) abgewandten Spitze des dreieckförmigen Flächenabschnitts (5a, 5b) befestigt ist, und wobei die Befestigung des Halteelements (4) an dem freien Randbereich (8) im mittleren Drittel einer Höhe (H) des Gassackes (2) vorgesehen ist und eine Länge L_{A} des zusätzlichen, nicht aufblasbaren Flächenabschnittes (5a, 5b) auf Höhe des Halteelementes (4) mehr als ein Drittel der freien Länge L_{H} des Halteelementes (4) beträgt.

2. Curtainairbagmodul nach Anspruch 1, **dadurch gekennzeichnet, dass** das Halteelement (4) ein Zugband ist, das vorzugsweise im Bereich seines gassackseitigen Endes mit dem Gassack (2) vernäht ist, und bei dem, weiter vorzugsweise, an dessen anderem Ende ein Verbindungselement (9), insbesondere ein Hakenelement, zur Verbindung des Halteelementes (4) mit der dem Fahrzeugkörper, insbesondere einer A- oder C-Säule, befestigt ist.

3. Curtainairbagmodul nach Anspruch 1 oder 2, **dadurch gekennzeichnet, dass** es hinter einer Fahrzeuginnenraumverkleidung montierbar ist, und sich im aufgeblasenen Zustand von einer A-Säule bis zu einer C-Säule oder D-Säule erstreckt.

4. Curtainairbagmodul nach einem der voranstehenden Ansprüche 1 bis 3, **dadurch gekennzeichnet, dass** es einen Gasgenerator (10) zum Bereitstellen von Aufblasgas für den Gassack (2) und eine Mehrzahl von Befestigungseinrichtungen aufweist, die vorzugsweise an einem oberen Randbereich des Gassackes (2) angebracht sind,

5. Fahrzeuginsassenrückhaltesystem mit einem Curtainairbagmodul nach zumindest einem der Ansprüche 1 bis 4 sowie mit zumindest einer Sensoreinheit zum Erfassen von Umständen, die einen Aktivierungsfall des Gasgenerators auslösen, und mit einer elektronischen Recheneinheit zum Definieren des Aktivierungsfalles auf Basis der von der Sensoreinheit erfassten Umstände.

## Claims

1. A curtain airbag module for a vehicle occupant restraint system comprising at least one airbag (2) for mounting on a vehicle body, wherein the airbag (2) is in the form of a lateral head airbag and, on its upper edge area (30) in the installed state, includes a plurality of fastening points (7) for mounting on an inner roof area of the vehicle body, wherein at least one holding element (4) on the one hand to be fastened on the vehicle side and on the other hand fastened on the airbag side is provided for positioning the airbag (2) when activated, wherein the holding element (4) is fastened on an additional non-inflatable surface portion (5a, 5b) that is connected to an inflatable portion (6) of the airbag (2), wherein the at least one additional non-inflatable surface portion (5a, 5b) is arranged on a front edge area (3a) in the installed state and/or on a rear edge area (3b) in the installed state of the inflatable portion (6) of the airbag (2), and wherein the holding element (4) is fastened to a free edge area (8) of the additional non-inflatable surface portion (5a, 5b), **characterized in that** the surface portion (5a, 5b) has a triangular design und with one side is fastened over a predetermined length to the front and/or rear edge area (3a, 3b) of the inflatable surface portion (6) of the airbag (2), and the holding element (4) is fastened to the tip of the triangular surface portion (5a, 5b) facing away from the airbag (2), and wherein the fastening of the holding element (4) on the free edge area (8) is provided in the middle third of a height (H) of the airbag (2) and a length L_{A} of the additional non-inflatable surface portion (5a, 5b) level with the holding element (4) amounts to more than one third of the free length L_{H} of the holding element (4).

2. The curtain airbag module according to claim 1, **characterized in that** the holding element (4) is a pull strap that is preferably stitched, in the area of its airbag-side end, to the airbag (2) and in which a connecting element (9), specifically a hook element, for connecting the holding element (4) to the vehicle body, specifically to an A column or a C column, is further preferably fastened to the other end thereof.

3. The curtain airbag module according to claim 1 or 2, **characterized in that** it can be mounted behind a vehicle interior lining and, when inflated, extends from an A column to a C column or D column.

4. The curtain airbag module according to any one of the preceding claims 1 to 3, **characterized in that** it includes an inflator (10) for providing inflation gas to the airbag (2) and a plurality of fastening devices which are preferably attached to an upper edge area of the airbag (2).

5. A vehicle occupant restraint system comprising a curtain airbag module according to at least one of the claims 1 to 4, as well as comprising at least one sensor unit for detecting circumstances which trigger an event of activation of the inflator, and comprising an electronic computing unit for defining the event of activation based on the circumstances detected by the sensor unit.

## Revendications

1. Module airbag rideau pour un système de retenue des occupants d'un véhicule, comportant au moins un coussin gonflable (2) destiné à être monté sur un élément de carrosserie de véhicule, pour lequel le coussin gonflable (2) est réalisé sous la forme d'un coussin gonflable latéral de tête et présente, sur sa zone de bordure (30) supérieure à l'état monté, une pluralité de points de fixation (7) pour le montage sur une zone intérieure de toit de la carrosserie de véhicule, pour lequel au moins un élément de retenue (4) pouvant être fixé d'une part côté véhicule et d'autre part côté coussin gonflable est prévu pour positionner le coussin gonflable (2) à l'état activé, pour lequel l'élément de retenue (4) est fixé à une section de surface supplémentaire non gonflable (5a, 5b) qui est reliée à une section gonflable (6) du coussin gonflable (2), pour lequel au moins une section de surface supplémentaire non gonflable (5a, 5b) est disposée sur une zone de bord avant (3a) à l'état monté et/ou sur une zone de bord arrière (3b) à l'état monté de la section gonflable (6) du coussin à gonflable (2), et pour lequel l'élément de retenue (4) est fixé sur une zone de bord libre (8) de la section de surface supplémentaire non gonflable (5a, 5b), **caractérisé en ce que** la section de surface (5a, 5b) est réalisée en forme de triangle et est fixée par un côté sur une longueur prédéterminée avec la zone de bord avant et/ou arrière (3a, 3b) de la section de surface gonflable (6) du coussin gonflable (2) et l'élément de retenue (4) est fixé à la pointe opposée au coussin gonflable (2) de la section de surface triangulaire (5a, 5b), et pour lequel la fixation de l'élément de retenue (4) sur la zone de bord libre (8) est prévue dans le tiers central d'une hauteur (H) du coussin gonflable (2) et une longueur L_{A} de la section de surface supplémentaire non gonflable (5a, 5b) au niveau de l'élément de retenue (4) est supérieure à un tiers de la longueur libre L_{H} de l'élément de retenue (4).

2. Module airbag rideau selon la revendication 1, **caractérisé en ce que** l'élément de retenue (4) est une bande de traction, laquelle est cousue de préférence dans la zone de son extrémité côté coussin gonflable avec le coussin gonflable (2), et par lequel, de préférence encore, un élément de liaison (9), en particulier un élément à crochet, est fixé à son autre extrémité pour relier l'élément de retenue (4) à l'élément de carrosserie du véhicule, en particulier à un piler A ou C.

3. Module airbag rideau selon la revendication 1 ou 2, **caractérisé en ce qu'**il peut être monté derrière un habillage d'habitacle de véhicule et s'étend, à l'état déployé, d'un pilier A jusqu'à un pilier C ou un pilier D.

4. Module airbag rideau selon l'une des revendications 1 à 3 précédentes, **caractérisé en ce qu'**il présente un générateur de gaz (10) pour fournir du gaz de gonflage pour le coussin gonflable (2) et une pluralité de dispositifs de fixation qui sont de préférence montés sur une zone de bord supérieure du coussin gonflable (2),

5. Système de retenue des occupants d'un véhicule comprenant un module airbag rideau selon au moins l'une des revendications 1 à 4 ainsi qu'au moins une unité de détection pour détecter des circonstances qui déclenchent un cas d'activation du générateur de gaz, et une unité de calcul électronique pour définir le cas d'activation sur la base des circonstances détectées par l'unité de détection.
